# DEMANDE DE BREVET EUROPEEN

(11) **EP 0 546 871 A1**
(43) Date de publication de la demande: **16.06.1993**
(21) Numéro de dépôt: 92400290.0
(22) Date de dépôt: 05.02.1992
(51) Int. Cl.: C01G 33/00, C01G 35/00, C01F 17/00, C09K 11/78

(54) **Procédé de préparation de fergusonites et produits obtenus**

(30) Priorité: 11.12.1991 FR 9115343
(71) Demandeur: RHONE-POULENC CHIMIE, 92408 Courbevoie Cédex (FR)
(72) Inventeur: Le Govic, Anne-Marie, F-75010 Paris (FR); Nussbaum, Hubert, F-64440 Boissy Fresnay (FR)
(74) Mandataire: Dubruc, Philippe

(57) **Abrégé**

L'invention concerne un procédé de synthèse de tantalates et/ou de niobates de terres rares ( fergusonites ) de formule MM'O₄ dans laquelle M représente au moins un élément pris dans le groupe constitué par les lanthanides et l'yttrium et M' représente le tantale et/ou le niobium, caractérisé en ce qu'il comprend les étapes suivantes :
a) on mélange un sol de tantale et/ou de niobium avec un sel de terres rares, soluble dans le mélange,
b) on sèche le mélange obtenu,
c) on calcine le produit séché.

Ce procédé permet d'aboutir à des produits très purs phasiquement et chimiquement.

L'invention concerne également les tantalates et/ou niobates de terres rares ainsi obtenus.

## Description

La présente invention concerne un procédé de préparation de fergusonites et, à titre de produits industriels nouveaux, des fergusonites telles que notamment obtenues par ce procédé.
Elle concerne également l'utilisation de ces produits comme luminophores et/ou matrices pour luminophores.

Dans l'exposé qui suit de la présente invention, on entend par terres rares, les éléments appartenant à la famille des lanthanides ayant un numéro atomique compris entre 57 et 71, ainsi que l'yttrium de numéro atomique 39.

On sait que les tantalates de terres rares et les niobates de terres rares (ou fergusonites) sont des produits intéressants, en raison notamment de leurs propriétés optiques et plus particulièrement de luminescence (voir à ce sujet, entre autres, G. BLASSE "Luminescence phenomena in compounds with fergusonite structure", Journal of Luminescence, 3 (1970), pp 109-131).

Dans de telles applications optiques, il est important, voire essentiel, que les tantalates et/ou niobates de terres rares se présentent sous une forme la plus pure possible et, de préférence, totalement monophasique.

Ainsi, on sait par exemple que pour le tantalate d'yttrium YTaO₄, qui peut exister sous trois formes cristallographiques différentes, à savoir deux phases monocliniques répertoriées M et M' et une phase quadratique haute température (> 1400°C), seule l'obtention de la phase pure M' est souhaitable, compte tenu du fait que cette dernière présente une efficacité lumineuse presque deux fois supérieure à celle de la phase M, la phase quadratique n'ayant quant à elle aucun intérêt.

La méthode de synthèse généralement décrite dans la littérature pour aboutir à des tantalates et/ou niobates de terres rares repose sur une réaction du type solide-solide, effectuée à haute température, entre des oxydes sous forme pulvérulente, et en présence d'un flux.
Plus précisément encore, on broye les oxydes en mélange avec le flux (sulfate de lithium, chlorure de lithium, sulfate de potassium, pris seuls ou en combinaison), on calcine le mélange ainsi broyé à une température de l'ordre de 1300°C, on lave le produit calciné, on le broye à nouveau, et on recommence deux fois toutes les opérations ci-avant, chaque cycle ayant pour but de parfaire la transformation en tantalate et/ou en niobate.

Un tel procédé présente de nombreux inconvénients, notamment celui d'être répétitif et d'un contrôle délicat, de conduire à des produits se présentant sous la forme de gros grains monocristallins de l'ordre d'une dizaine de microns, difficilement broyables, et pouvant en outre contenir des quantités plus ou moins importantes d'impuretés liées notamment à l'emploi du flux. Par ailleurs, il nécessite la mise en oeuvre de nombreux broyages, opérations généralement longues et coûteuses, et de températures de calcination élevées.

La présente invention a notamment pour but de résoudre les problèmes ci-dessus.
Elle vise ainsi à proposer un nouveau procédé de synthèse de fergusonites, ne nécessitant l'emploi ni de flux, ni d'étape de broyage, ni de température de calcination trop élevée.

Elle vise également à proposer un procédé permettant d'accéder de manière simple, reproductible et contrôlée, à des fergusonites à très grande pureté phasique.

A cet effet, on a maintenant trouvé, et il s'agit là d'un des premiers objets de la présente invention, un nouveau procédé de préparation de fergusonites de formule MM'O₄ dans laquelle M représente au moins un élément pris dans le groupe constitué par les lanthanides et l'yttrium et M' représente le tantale et/ou le niobium, ledit procédé étant caractérisé par le fait qu'il comprend les étapes suivantes :
a) on mélange un sol de tantale et/ou un sol de niobium avec un sel de terres rares, ledit sel étant soluble dans le mélange,
b) on sèche le mélange obtenu
c) on calcine le produit séché.

Après calcination, on obtient directement un tantalate et/ou niobate de terres rares parfaitement pur phasiquement, très homogène chimiquement (rapport M/M' constant en tous points du produit) et à très fine granulomètrie. En outre, selon l'invention, on peut ajuster et contrôler facilement la taille des poudres finales, et ceci simplement en jouant sur la taille des sols initiaux.

Mais d'autres caractéristiques, aspects et avantages de l'invention apparaitront encore plus clairement à la lecture de la description détaillée qui va suivre.

Les expressions sol de tantale et sol de niobium sont ici prises dans leurs sens commun, c'est à dire qu'elles désignent tout système composé de fines particules colloïdales solides à base d'oxyde et/ou d'oxyde hydraté de tantale (Ta₂O₅, nH₂O) ou de niobium (Nb₂O₅, nH₂O), en suspension dans une phase liquide.

Les sols de tantale ou de niobium de départ utilisés selon l'invention, ainsi que leurs procédés de synthèse, sont bien connus de l'homme de l'art, et ont déjà été décrits dans la littérature. Ils peuvent être notamment obtenus par hydrolyse contrôlée d'alcoxydes de tantale ou de niobium en milieu alcoolique, en présence ou non d'un catalyseur basique tel que l'ammoniaque, ce qui conduit à un sol de tantale ou de niobium en milieu organique. Pour obtenir des sols aqueux, on peut par exemple récupérer les particules constituant le sol organique ci-dessus (par ultracentrifugation, précipitation/filtration, ou autre), procéder ensuite à leur lavage si nécessaire, puis à leur repeptisation dans de l'eau acidulée. La taille des sols est classiquement réglée en fonction des conditions initiales d'hydrolyse (ajustement des rapports H₂O/M' et/ou NH₃/M') dans le milieu organique.

D'un point de vue pratique, selon l'invention, on utilise de préférence des sols aqueux. L'emploi de sols organiques n'est toutefois pas exclu.
La taille moyenne des colloïdes dans ces sols peut varier de 0,05 µm à 1 µm, ces colloïdes étant eux-mêmes généralement constitués de l'agglomération de particules élémentaires dont la taille peut être comprise entre 5 nm et 100 nm.

Selon le procédé de l'invention, on mélange alors aux sols ci-dessus au moins un sel de terres rares, ce sel devant être soluble dans la phase dispersante constituant le sol. Le mélange doit être le plus homogène possible.
A titre de sels solubles, on peut citer plus particulièrement les nitrates, les halogènures, et notamment les chlorures, ainsi que les sulfates. De préférence, on utilise des nitrates. Ce sel peut être introduit sous une forme solide ou, de préférence, sous la forme d'une solution, aqueuse ou organique.

A titre de terres rares, on peut citer notamment l'yttrium, le lanthane, le gadolinium et le lutécium, cette liste n'étant bien entendu nullement limitative. Le procédé selon l'invention convient particulièrement bien à la préparation du tantalate d'yttrium.
Il est également possible d'utiliser des mélanges de terres rares.

Les quantités de sol de tantale et/ou de sol de niobium et de sel de terres rares à mettre en oeuvre sont ajustées pour avoir dans le mélange un rapport molaire terre(s) rare(s) / Tantale ou Niobium correspondant à la stoëchiométrie, à savoir un rapport égal, ou sensiblement égal, à 1. Le mélange peut contenir de 1 à 30 % en poids de matière sèche.

Le mélange ainsi obtenu doit ensuite être séché.
Ce séchage peut être réalisé par tout moyen connu en soi, notamment par atomisation, c'est à dire par pulvérisation du mélange dans une atmosphère chaude. De nombreux types d'atomiseurs classiques peuvent être utilisés à cet effet.
On peut également réaliser ce séchage dans un réacteur "flash", par exemple du type mis au point par la Demanderesse et décrit notamment dans les brevets français n° 2 257 326, 2 419 754 et 2 431 321. Dans ce cas, les gaz traitants sont animés d'un mouvement hélicoïdal et s'écoulent dans un puits-tourbillon. Le mélange est injecté suivant une trajectoire confondue avec l'axe de symétrie des trajectoires hélicoïdales des gaz ce qui permet de tranférer parfaitement la quantité de mouvement des gaz aux particules dudit mélange.
Les gaz assurent ainsi une double fonction : d'une part la pulvérisation, c'est à dire la transformation en fines gouttelettes, de la suspension, et d'autre par le . séchage des gouttelettes obtenues. Par ailleurs, le temps de séjour des particules dans le réacteur est extrêmement faible, il est inférieur à 1/10 de seconde environ, ce qui supprime tout risque de surchauffe par suite d'un contact trop long avec les gaz.
Selon les débits respectifs des gaz et du mélange, la température d'entrée des gaz est comprise entre 600°C et 900°C, de préférence comprise entre 700°C et 900°C, et la température de sortie du solide séché comprise entre 100°C et 300°, de préférence enre 150°C et 250°C.

A l'issue du séchage, on obtient un produit sec présentant une granulométrie de l'ordre de quelques microns, généralement comprise entre 1 et 10 microns. Les grains sont constitués de particules d'oxyde et/ou d'oxyde hydraté de tantale ou de niobium à la surface desquels on retrouve, dispersé de façon parfaitement homogène, le sel de terres rares.

Le produit récupéré est ensuite calciné, généralement sous air. Il est chauffé à une température et pendant un temps suffisants pour obtenir la phase fergusonite désirée, ce temps étant généralement d'autant plus court que la température est élevée. Cette température dépend bien entendu du tantalate ou du niobate de terres rares considéré. Dans tous les cas, on note que cette température est plus faible que celle mise en oeuvre dans les procédés classiques de chamottage.
A titre d'exemple, pour du tantalate d'yttrium YTaO₄, des températures de calcination comprises entre 1000 et 1100°C suffisent, alors que par chamottage sous flux des températures de l'ordre de 1300°C sont nécessaires.

A la suite de cette calcination, on obtient directement une poudre de tantalate et/ou de niobate de terres rares présentant une granulométrie moyenne comprise entre 1 et 5 µm environ, les grains (ou aggrégats) formant cette poudre étant eux-mêmes constitués de cristallites élémentaires (monocristaux) de taille comprise entre 100 et 500 Å, et généralement située située autour de 300 Å. Les grains ont une forme sensiblement sphérique. Ces fergusonites constituent un second objet de la présente invention.
Cette poudre ne présente aucune phase parasite, est parfaitement pure chimiquement, et est très homogène (rapport M/M' constant et égal à 1, mesuré par la méthode EDS).

L'exemple suivant illustre l'invention sans en limiter la portée.

### Exemple

Un sol organique de tantale est préparé par hydrolyse contrôlée, à 50°C pendant 20 heures, du pentaéthoxyde de tantale Ta(OEt)₅ dans une solution d'éthanol et en présence d'ammoniaque (H₂O/Ta = 6; OH/Ta = 0,4).
Les particules en suspension sont ensuite isolées de la phase organique (floculation par ajout de nitrate d'ammonium, puis récupération par filtration), lavées, puis repeptisées dans une solution d'acide nitrique 1M.

On obtient ainsi un sol aqueux de tantale (3,5 % en Ta₂O₅) présentant une taille moyenne de colloïdes de l'ordre de 200 nm, et monodisperse.

A 318 g de ce sol, on ajoute 36,8 ml d'une solution aqueuse de nitrate d'yttrium 1,36 M de manière à avoir dans le mélange un rapport molaire Y/Ta égal à 1.

Le mélange ainsi obtenu est alors séché par atomisation (atomiseur BUCHI); la température d'entrée des gaz est de 230°C et celle de sortie est de 123°C, la pression étant de 0,8 bar.

Après calcination à 1050°C pendant 60 heures, on récupère une poudre blanche de tantalate d'yttrium, de structure monoclinique de type M', exempte de toute impureté phasique.

Le produit est constitué de billes de diamètre compris entre 1 et 5 µm, ces billes étant des aggrégats de cristallites élémentaires dont la taille moyenne est centrée sur 300 Å.

## Revendications

**1-** Procédé de préparation d'une fergusonite de formule MM'O₄ dans laquelle M représente au moins un élément pris dans le groupe constitué par les lanthanides et l'yttrium et M' représente le tantale et/ou le niobium, caractérisé en ce qu'il comprend les étapes suivantes :
a) on mélange un sol de tantale et/ou un sol de niobium avec un sel de terres rares, soluble dans le mélange,
b) on sèche le mélange obtenu,
c) on calcine le produit séché.

**2-** Procédé selon la revendication 1, caractérisé en ce que ledit sol est un sol aqueux.

**3-** Procédé selon l'une des revendications 1 ou 2, caractérisé en ce que la taille moyenne des colloïdes constituant ledit sol est comprise entre 0,05 µm et 1 µm.

**4-** Procédé selon l'une quelconque des renvendications précédentes, caractérisé en ce que ledit sel est choisi parmi les nitrates,les sulfates, les halogénures, et notamment les chlorures.

**5-** Procédé selon l'une quelconque des revendications précédentes, caractérisé en ce que la terre rare est l'yttrium.

**6-** Procédé selon l'une quelconque des revendications précédentes, caractérisé en ce que ledit séchage se fait par atomisation.

**7-** Fergusonite pulvérulente, susceptible d'être obtenue par un procédé tel que défini à l'une quelconque des revendications 1 à 6, caractérisée en ce qu'elle présente une taille moyenne de grains comprise entre 1 et 5 µm, lesdits grains étant eux-mêmes constitués de cristallites élémentaires de taille comprise entre 100 et 500 A.

**8-** Fergusonite selon la revendication 7, caractérisée en ce que lesdits grains ont une forme sensiblement sphérique.

**9-** Fergusonite selon l'une quelconque des revendications 7 ou 8, caractérisée en ce qu'elle se présente sous une forme pure, phasiquement et chimiquement.

**10-** Fergusonite selon l'une quelconque des revendications 7 à 9, caractérisée en ce qu'il s'agit d'un tantalate.

**11-** Fergusonite selon l'une quelconque des revendications 7 à 10, caractérisée en ce que la terre rare est l'yttrium.

**12-** Utilisation d'une fergusonite telle que définie à l'une quelconque des revendications 7 à 11, comme luminophore et/ou matrice pour luminophore.
